(19)

Europäisches Patentamt
European Patent Office
Office européen des brevets

(11) **EP 2 070 875 B1**

(12) **EUROPEAN PATENT SPECIFICATION**

(45) Date of publication and mention of the grant of the patent:
**19.10.2016 Bulletin 2016/42**

(51) Int Cl.:
*C02F 1/469* (2006.01)  *C02F 1/461* (2006.01)
*H01M 4/04* (2006.01)  *H01G 9/04* (2006.01)

(21) Application number: **08150744.4**

(22) Date of filing: **29.01.2008**

(54) **PROCESS FOR PRODUCING AN ELECTRODE FOR CAPACITIVE DEIONISATION AND ELECTRODE OBTAINED BY SAID PROCESS**

VERFAHREN ZUR HERSTELLUNG EINER ELEKTRODE ZUR KAPAZITIVEN DEIONISIERUNG UND DAMIT ERHALTENE ELEKTRODE

PROCÉDÉ DE PRODUCTION D'UNE ÉLECTRODE POUR DÉSIONISATION CAPACITIVE ET ÉLECTRODE AINSI OBTENUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.12.2007 IN MU24572007**

(43) Date of publication of application:
**17.06.2009 Bulletin 2009/25**

(73) Proprietor: **Unilever N.V.**
**3013 AL Rotterdam (NL)**

(72) Inventors:
• **Kadam, Manoj Krishna**
**Bangalore 560 066 (IN)**
• **Nadakatti, Suresh Murigeppa**
**Bangalore, 560 066 (IN)**

• **Tendulkar, Mahesh Subhash**
**Bangalore, 560 066 (IN)**

(74) Representative: **van den Brom, Coenraad Richard**
**Unilever Patent Group**
**Olivier van Noortlaan 120**
**3133 AT Vlaardingen (NL)**

(56) References cited:
**EP-A- 1 555 244**     **RU-C1- 2 181 107**
**US-B1- 6 778 378**

• **PEKALA R W ET AL: "Carbon aerogels for electrochemical applications" JOURNAL OF NON-CRYSTALLINE SOLIDS, NORTH-HOLLAND PHYSICS PUBLISHING. AMSTERDAM, NL, vol. 225, no. 1-3, 15 April 1998 (1998-04-15), pages 74-80, XP004178512 ISSN: 0022-3093**

**Description**

**TECHNICAL *FIELD***

The present invention relates to a process for preparing an electrode composition for capacitative deionization for removal of dissolved salts from water and to an electrode prepared by said process for preparing the same. In particular the invention relates to use of such systems in water purification devices.

BACKGROUND AND PRIOR ART

A large population of people in the world live in countries where there is a severe shortage of hygienic potable water. A high percentage of these people live in rural and far flung areas where there are few if any municipal drinking water treatment plants. People have to depend directly on ground water sources like wells, ponds and rivers.

The water from these sources can contain high levels of dissolved salts of the order of 500-3000 ppm which makes the water unsuitable for drinking purposes. Water with salt levels of the order of 500-1500 ppm has an unpleasant taste and water with salt levels beyond 1500 ppm is termed generally as 'brackish water' and it tastes very salty. Salt levels of 50-300 ppm tastes good and is generally accepted by all as good drinking water.

Reverse osmosis is the most popular and commercially available method used to remove the salt content of water and it is very effective in removal of salts from water. But, this method being highly capital and energy intensive the cost/liter of water treated is very high and not affordable by all. Moreover, the recovery of purified water in comparison to the input water is only about 20%. The other technologies which have been developed for removal of salts from water include nano-filtration, electrodialysis, etc but these have not really been largely commercialized.

Another technology that is useful in salt removal is capacitative deionization. In this technology water containing salts is allowed to flow through a pair of oppositely charged electrodes and ions are electrosorbed on the surface of the electrodes thereby removing the salt in treated water. This technology has been shown to effectively remove salt from water at significantly lower energy consumption and with significantly higher recovery rates. Heart of the capacitative deionization technology is an electrode with high capacitance for use as the capacitor. It is generally considered that an electrode for use as a capacitor should have the characteristics of high surface area and high capacitance along with high conductivity and low resistivity. In the past activated carbon was used as the electrode material since it has high surface area and to enhance its conductivity and capacitance conductive carbon black was also included. Various kinds of binders were added to the composition in order to hold the carbon particles together.

EP1555244 (Korea Institute of Science and Technology, 2005), US6127474 (Andelman, 2000), US7110242 (C and T Company, 2006), US6022436 (Koslow Technologies Corporation, 2000), US2005/0042513 (Curran et al, 2005) and US2006/0114643 (Maxwell Technologies Inc, 2006) disclose electrode compositions for use in capacitative deionization technology and they disclose compositions with activated carbon along with a binder e.g. a fibrillated polymer and conductive carbon black in various proportions and with various particle sizes. The fibrillated polymeric binders used in the prior art are typically fluorocarbons e.g. poly tetra fluoro ethylene (PTFE). Use of very fine activated carbon particles of <50 microns can result in electrodes with high capacitance and such compositions require a fibrillated polymeric binder which essentially involve very high shear during processing to form interconnecting web of fibers that will hold the fine carbon particles together, thus making the process complicated and expensive. On the other hand, very coarse activated carbon particles of >300 microns can be bound by thermoplastic polymeric binder such as polyethylene to form electrodes but they have relatively low capacitance, although the process is simple.

The prior art does not teach an electrode composition that has high capacitance which can be prepared using a simple inexpensive process.

The present inventors have found that use of activated carbon of intermediate particle size along with small levels of conductive carbon black can be bound to form an electrode without the need for using fibrillated polymeric binders. These electrode compositions have high capacitance and can be prepared using a simple and inexpensive process.

It is an object of the present invention to provide an electrode with high capacitance for use in capacitative deionization of water that is simple and inexpensive.

It is another object of the present invention to provide an electrode with high capacitance for use in capacitative deionization of water that is simple by avoiding the use of fibrillatable polymers as binder.

It is another object of the present invention to provide a process for making an electrode with high capacitance for use in capacitative deionization of water.

It is another object of the present invention to provide a device including an electrode with high capacitance for use in capacitative deionization of water.

It is another object of the present invention to provide a device for water purification having the additional feature for reducing the total dissolved salts from the purified water.

## SUMMARY OF THE INVENTION

According to another aspect of the present invention there is provided a process for preparing an electrode for capacitative deionization of water as claimed in claim 1 comprising:

(i) forming a composition of 60-88% by weight of activated carbon with a particle size range of 75-300 microns, 5-30% by weight of thermoplastic polymeric binder with a particle size range of 20-60 microns and 2-30% by weight of conductive carbon black having a mesoporous area greater than 100 m$^2$/g and including a fluid to said mixture wherein amount of said fluid is not more than 4 times the weight of said composition;
(ii) casting the composition obtained in step (i) in a mold;
(iii) optionally, compressing said mold;
(iv) heating said mold to a temperature in the range 150°C to 350°C
(v) demolding the molded electrode.

A preferred aspect of the process provides for the composition to be substantially free of fibrillated polymer.
According to another aspect of the present invention there is provided an electrode for capacitive deionisation obtainable by said process and a gravity fed purification system comprising the electrode.

## DETAILED DESCRIPTION OF THE INVENTION:

According to the present invention there is provided an electrode for capacitative deionization of water and also a process for preparing the same. A plurality of such electrodes can be included as part of water purification units and especially gravity fed water purification devices so that apart from obtaining pure and safe water for drinking the levels of dissolved salts can be significantly reduced making the water acceptable by enhancing its taste.

Activated Carbon:

Activated carbon is preferably selected from one or more of bituminous coal, coconut shell, wood and petroleum tar. Surface area of the activated carbon preferably exceeds 500 m$^2$/g, more preferably exceeds 1000 m$^2$/g. Preferably, the activated carbon has a size uniformity co-efficient of less than 2, more preferably less than 1.5, Carbon Tetrachloride number exceeding 50%, more preferably exceeding 60%. The activated carbon preferably has an Iodine number greater than 800, more preferably greater than 1000.
The activated carbon has a particle size in the range of 75 to 300 microns, preferably from 100 to 250 microns.

Thermoplastic Binder:

The term Thermoplastic polymeric binder according to the invention is preferably a binder having melt flow rate (MFR) less than 5 g/ 10 minutes, more preferably less than 2 g/ 10 minutes, further more preferably less then 1 g/ 10 minutes. Bulk density of the binder used as per the invention is preferably less than or equal to 0.6 g/cm$^3$, more preferably less than or equal to 0.5 g/cm$^3$, and further more preferably less than or equal to 0.25 g/cm$^3$.
The melt-flow rate (MFR) is measured using ASTM D 1238 (ISO 1133) test. The test measures the flow of a molten polymer through an extrusion plastometer under specific temperature and load conditions. The extrusion plastometer consists of a vertical cylinder with a small die of 2 mm at the bottom and a removable piston at the top. A charge of material is placed in the cylinder and preheated for several minutes. The piston is placed on top of the molten polymer and its weight forces the polymer through the die and on to a collecting plate. The time interval for the test ranges from 15 seconds to 15 minutes in order to accommodate the different viscosities of plastics. Temperatures used are 190, 220, 250 and 300 °C (428, 482 and 572°F). Loads used are 1.2, 5, 10 and 15 kg. As per the present invention the tests are done at 190 °C at 15 kg load.
The amount of polymer collected after a specific interval is weighed and normalized to the number of grams that would have been extruded in 10 minutes: melt flow rate is expressed in grams per reference time.
The binder is preferably a thermoplastic polymer having the low MFR values above described. Suitable examples include ultra high molecular weight polymer preferably polyethylene, polypropylene and combinations thereof, which have these low MFR values. The molecular weight is preferably in the range of 10$^6$ to 10$^9$ g/mole. Binders of this class are commercially available under the trade names HOSTALEN from Tycona GMBH, GUR, Sunfine (from Asahi, Japan), Hizex (from Mitsubishi) and from Brasken Corp (Brazil). Other suitable binders include LDPE sold as Lupolen (from Basel Polyolefins) and LLDPE from Qunos (Australia).
The thermoplastic binder is preferably not a fibrillated polymer e.g. polytetrafluoroethylene (PTFE).
The particle size of the thermoplastic binder is in the range of 20 to 60 microns, preferably greater then 40 microns. The thermoplastic binder is preferably present in 8 - 30%, more preferably in 10-30%, further more preferably 12 - 28% by weight of the electrode.

The ratio of activated carbon to binder is preferably in the range of 1:1 to 20:1, more preferably in the range of 1:1 to 10:1 parts by weight.

According to the present invention relates to a process for preparing an electrode of the invention. The inventive process provides for a method for preparing an electrode for capacitative deionization of water. The process comprises of forming a composition of 60-88% by weight of activated carbon with a particle size range of 75-300 microns, 5-30% by weight of thermoplastic polymeric binder with a particle size range of 20-60 microns and 2-30% by weight of conductive carbon black having a mesopore area 2 greater than 100 $m^2$/g and including a fluid to said mixture wherein amount of said fluid is not more than 4 times the weight of said composition; casting the composition obtained in step (i) in a mold; optionally, compressing said mold; heating said mold to a temperature in the range 150°C to 350°C and demolding the molded electrode. The moulded electrode is preferably cooled to ambient temperature before it is demoulded.

Mixing is preferably done in vessels which include an agitator, mixer with dulled impeller blades, ribbon blender, rotary mixer, sigma mixer or any other low shear mixer that does not significantly alter the particle size distribution. The preferred mixer is sigma mixer or ribbon blender. The mixing is carried out to prepare a uniform mix of the composition of the electrode. It is essential, according to the invention that this step of mixing is carried out in the presence of a fluid. The term "fluid" for the purpose of this invention includes solvents preferably selected from the group consisting of water, ethyl alcohol and mixtures thereof. According to the most preferred aspect, the fluid is water. The fluid used is not more that 4 times the amount of the activated carbon by weight, and preferably not more than 3 times, most preferably from 0.5 to 1.5 times. The binder is then added to the above mixture and is further mixed.

The compacted mass is then placed in a mould of pre-selected size and shape and subjected to a pressure of not more than 30 kg/cm$^2$, preferably from *12 to 25* kg/cm$^2$. The pressure is preferably applied using either a hydraulic press or a pneumatic press, more preferably a hydraulic press. The mould is made of aluminum, cast iron, steel or any material capable of withstanding temperatures exceeding 400 °C.

A mould release agent is preferably coated on the inside surface of the mould. The mould release agent is preferably selected from silicone oil, aluminum foil, or the mould can be coated with suitable materials like Teflon or any other commercially available mould release agent that has little or no adsorption onto the electrode.

The mould is then heated to a temperature of 150°C to 350 °C, preferably in the range of 200 °C to 300 °C. The mould is kept heated for more than 60 minutes, preferably 90 to 300 minutes. The mould is preferably heated in an oven using a non-convection, forced air or forced inert-gas convection oven. The mould is then cooled and the moulded electrode released from the mould.

The electrode is preferably in the form of a sheet. The thickness of the sheet is preferably not greater than 3 mm

Current collector:

The electrode composition is preferably cast over a current collector in the mold. Suitable current collector material is selected from graphite, aluminium or titanium.

Conductive Carbon Black (CCB):

The carbon black is a form of elemental carbon. Most carbon black is produced by the oil furnace process from liquid, aromatic hydrocarbons. In selecting carbon black for electrode making according to invention, key factors to consider are: Total surface area and mesopore surface area, structure and surface oxidation. The conductive carbon black used in the electrode of the invention preferably has total surface area higher than 500 $m^2$/g.

<u>Mesopore Surface Area</u>: The conductive carbon black, as per the invention, has mesopore area greater than 100m$^2$/g. more preferably in the range of 100-1000 $m^2$/g.

<u>Structure</u>: Structure of the carbon black is characterized by Oil Absorption Number (OAN). Commercially available carbon black has OAN in the range from about 45 to about 400 cc/ 100 grams of black. The conductive carbon black, as per the invention, preferably has Oil Absorption Number (OAN) greater than 100 cc/ 100 g, preferably in the range of 100-400 cc/ 100 g, more preferably in the range of 250-400 cc/ 100 g.

<u>Surface oxidation:</u> The conductive carbon black, as per the invention, has low chemisorbed oxygen on their surfaces.

Suitable grades of carbon black may be procured from TIMCAL Graphite & Carbon (Grades: Ensaco 250G, Ensaco 350) or from Cabot Corporation (Grades: Regal, Black Pearl 2000, Vulcan), or from EVONOVIK (Grade: PRINTEX XE-2), or from AKZO NOBEL (Ketjen Black).

The electrode of the present invention can be designed to be incorporated as a part of any standard water purification system. It is particularly useful to include it as part of a gravity fed water purification system. This, in addition to providing safe drinking water, will be capable of reducing the dissolved salts significantly and enhance the taste of water.

Further details of the invention, its objects and advantages are explained hereunder in greater details with reference to the following non-limiting examples. It would be apparent to a person skilled in the art that many such examples are possible and the examples given under are for illustrative purpose only. These should not be construed so as to limit the scope of this invention in any manner.

**Brief Description of the Figures:**

Figure 1 is an embodiment of a device for purification of water as per the invention comprising a pair of disc shaped electrodes.
Figure 2 is a top view of one of the bottom electrode used in Figure 1.
Figure 3 is a top view of the porous separator used in Figure 1.
Figure 4 is a blown up view of the electrode assembly used in Figure 1.

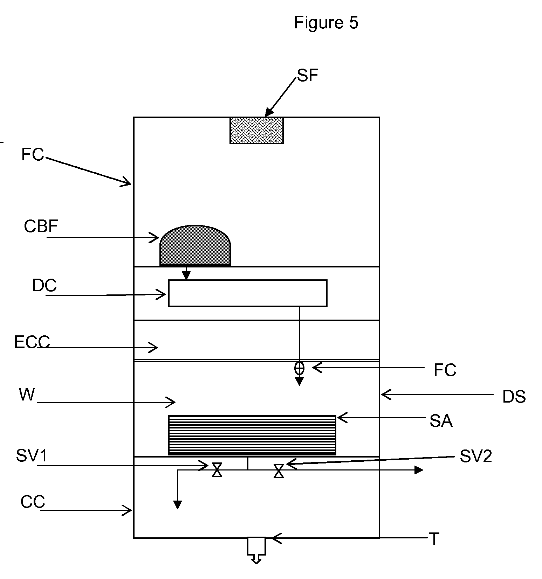

Figure 5 is a schematic of a gravity fed water purification device.
Figure 6 is an embodiment of a stack of three electrode pairs used in the water purification device of Figure 5.

**Detailed Description of the Figures:**

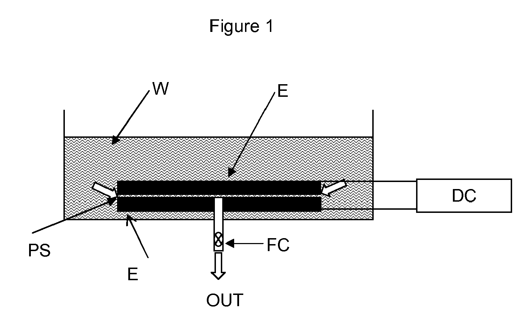

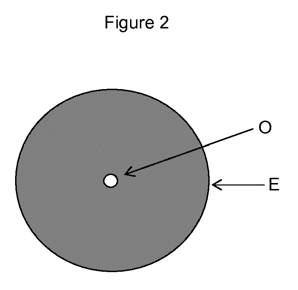

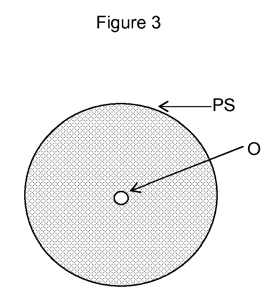

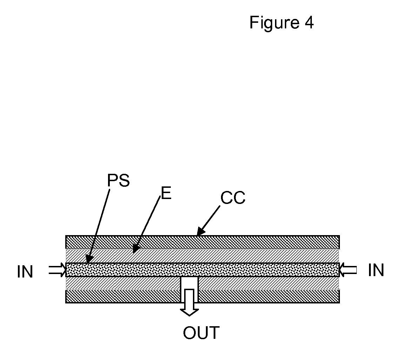

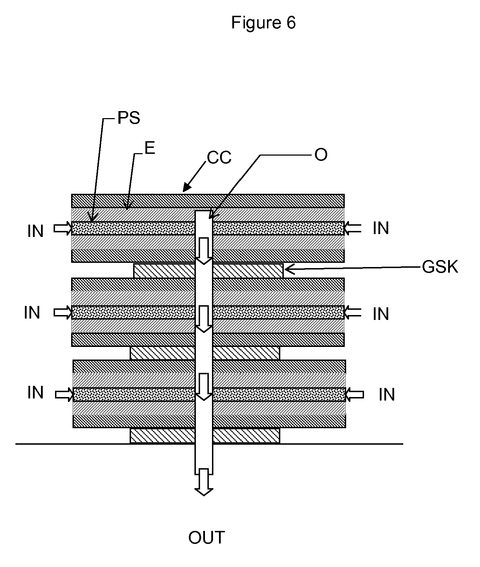

Referring to Figures 1 to 4, the device for purification of water comprises Electrodes (E). In the present embodiment there are a pair of electrodes. One electrode acts as an anode and another as cathode. The two electrodes are connected to a DC power supply (DC). The pair of electrodes are immersed in a pool of water to be purified (W). The pair of electrodes are separated by a porous separator (PS). The bottom electrode and the porous separator have a hole (O) for the water to flow out. The purified water exits the device through the opening (OUT) through a pinch valve (FC) which is used to control the flow rate of the water. Each of the electrodes are moulded on to a current collector (CC).
When in use, a DC voltage, typically less than 1.4 V, is applied across the two electrodes. Water flows through the space between the electrodes in the direction (IN) under force of gravity and the ions of the dissolved salts are electrosorbed on to the electrodes. The purified water, low in dissolved salts, flows through the valve (FC) and exits the system through the opening (O).
Referring to Figure - 5, the water purification device has a coarse filter (SF) provided upstream of the feed chamber (FC). The sediment filter (SF) is made of non woven fabric. The feed chamber has a height of about 20 cm which is a low gravity head for filtration of the water through the carbon block filter medium (CBF). Downstream of the carbon block filter is a UV disinfection chamber (DC). The UV disinfection chamber is the annular space between a UV bulb & a casing (not shown). A desalination chamber (DS) is provided downstream of the UV chamber (DC). An electronic control circuit (ECC) supplies power to UV bulb & to desalination chamber (DS). The desalination chamber has a parallel stack assembly (SA) of three electrode pairs immersed in a pool of water to be purified (W). The desalination chamber (DS) is in fluid communication with a collection chamber (CC) through a solenoid valve (SV1). A second solenoid valve (SV2) is provided downstream of the desalination chamber which is connected to the sink for use during discharge mode. The collection chamber (CC) has a tap (T).
Referring to Figure 6, the parallel stack assembly (SA) has three electrode pairs each capable of capacitative deionisation. One electrode (E) acts as an anode and other as cathode. The anode and cathode are separated by a porous separator (PS) and one electrode pair is separated from the other electrode pair by gasket material (GSK). Except top electrode of top pair, all electrodes and the porous separator have a hole (O) for the water to flow out. A DC charge voltage (~ +1.4 V) and DC discharge voltage (~ -1.4) is applied across the two electrodes by means of control circuit (CC) in cyclic sequence.
When in use, during the purification cycle, water to be purified is added to the feed chamber (FC) through sediment filter (SF). The sediment filter removes particles in the size range of ~ 3 to 20 micron. The water then flows through the carbon block filter which removes particle finer than 3 micron, dissolved organics and pesticides. It also filters chlorine resistant cysts. The water from the carbon block filter then flows down by gravity through UV disinfection chamber (DC) which generates ultraviolet rays that permanently inactivate bacteria and virus. The water exiting the UV chamber (DC) outlet then passes through desalination chamber (DS). A DC charge voltage of ~ +1.4 V is applied across the electrodes by means of control circuit (CC). Water flows through the space between the electrodes in the direction (IN) under force of gravity. During the purification cycle, ions of the dissolved solids are adsorbed on to the electrodes. The purified water, low in dissolved solids, flows through the solenoid valve (SV 1) and collects in a collection chamber (CC). The purified water which is microbiologically safe and with reduced salt levels is then dispensed through the tap (T).
During the discharge cycle, water is poured into the top chamber and flows along the same path as during the purification cycle. The difference is that during the discharge cycle, a DC voltage of ~ -1.4 V is applied across the electrodes by means of control circuit (CC). The ions of the dissolved solids, adsorbed on to the electrodes during the purification cycle, are now desorbed into the waste water which is led to the sink through solenoid valve SV2. After the discharge cycle the gravity fed water purification device is then ready for generating purified water.

**Examples:**

Method for preparing an electrode sheet

Activated carbon, binder, de-ionised water and conductive carbon black (if used), were mixed in a beaker under low shear. In a typical experiment, about 16 gm of mixture was spread over titanium sheet placed in the mould. The mould was subjected to pressure of ~ 25 kg/cm$^2$ using hydraulic press. The mould was heated in an oven to a temperature of 250° C for 2 hours. The mould was removed from oven and cooled under ambient condition. Mould was equilibrated to ambient temperature, demoulded, and the electrode sheet was removed from the mould.

Method for measurement of capacitance

From the electrode prepared using the procedure described above, a small piece (of 9 mg) and large piece (of ~ 270 mg) were cut. Capacitance measurements were performed using a voltametry analyzer (from Bioanalytical systems). The reference electrode used was Ag/AgCl electrode immersed in 3M sodium chloride solution. The working electrode was a platinum wire with a small piece of electrode material (9 mg) attached to it. The auxiliary electrode was also platinum wire with the large piece (270 mg) of electrode material attached to it. 0.5 M sodium chloride solution was used as an electrolyte. Before any measurements were made, the electrode samples were placed in the aqueous solution and cycled between the potential window of interest (-0.4 to +0.6 V) for at least three times to ensure that no bubbles were trapped in the sample. Sample was subjected to scanrate (dv/dt) of 5 mV/s in the voltage range between -0.4 to +0.6 V. Current -voltage data was recorded. Capacitance (C) was calculated from the data using the relationship:

$$C = \int i \frac{dt}{dv}$$

Various electrodes were prepared using the compositions listed in Table -1.

Table - 1

| Example | Activated Carbon, grams | Activated Carbon, particle size, microns | Binder, grams | CCB brand | CCB, grams | CCB, Mesopore area, m$^2$/g | Oil Absorption Number (OAN) cc/g | Capacitance , F/g |
|---|---|---|---|---|---|---|---|---|
| A | 80 | 250-500 | 20 | - | - | - | | 4 |
| B | 80 | 75-250 | 20 | - | - | - | | 14 |
| C | 80 | <75 | 20 | - | - | - | | ## |
| 1 | 78 | 75-250 | 20 | Regal | 2 | <90 | 46 | 17 |
| 2 | 78 | 75-250 | 20 | Ensac o 350G | 2 | 455 | 320 | 34 |
| 3 | 70 | 75-250 | 20 | Regal | 10 | <90 | 46 | 17 |
| 4 | 70 | 75-250 | 20 | Ensac o 350G | 10 | 455 | 320 | 45 |
| 5 | 70 | 75-250 | 20 | Vulcan | 10 | 158 | 180 | 30 |
| 6 | 70 | 75-250 | 20 | BP-2000 | 10 | 580 | 300 | 38 |
| D | Commercial Carbon electrode (Aerogel) procured from Marktech International | | | | | | | 30 |
| ## The electrode disc strength was low and crumbled easily. | | | | | | | | |

The data in Table - 1, indicates that Examples within the invention (Examples 1 to 6) are able to provide electrodes having capacitance better than electrodes prepared outside the invention (Examples A to C). Further, electrodes as per preferred aspects of the invention provide better capacitance as compared to one of the best commercially available electrode (Example D).

**Example 7:** Evaluation of electrode material for use in capacitive deionization

The experimental set up as shown in Figure 1, was used. Two circular electrode discs of 15 cm diameter and 1.2 mm thickness (Weight/ sheet ~ 7 g) were prepared on titanium as a current collector. The composition of the electrode was a per Example - 4. Two discs of electrodes (pair of cathode & anode) were taken for the testing purpose. A hole was made in one of the discs at the centre for the passage of water (as outlet). The two electrode discs were separated by a thin, porous separator (Whatman paper) of thickness less than 1 mm. Titanium current collectors were connected to DC power source. Conductivity sensor was placed in the outlet stream for online monitoring of conductivity of water. The chamber was filled with feed stream of NaCl solution of 2 ms/cm conductivity (corresponding to a Total dissolved salts of about 1000 ppm by weight) and outlet flow rate was controlled between 12 to 15 ml/min. Sufficient amount of feed stream was allowed to pass through the electrode assembly to ensure that no air bubbles were trapped inside. The electrode assembly then subjected to the Electrosorption (+1.4 V) and regeneration (-1.4 V).
The salt removal obtained using this system was 50%.
Recovery is another measure of the efficiency of the system. Recovery is the ratio of purified water quantity to feed water quantity in a full purification-regeneration cycle. Capacitative de-ionisation requires a regeneration cycle where the ions adsorbed on to the electrodes are removed by passing water through the system while reversing the polarity of the electrodes. The recovery in this example was about 50%.

**Example 8:** Effect of electrode thickness

The Example 7 was repeated with an electrode having a thickness of 3mm. Weight/ sheet was ~ 20 g.
Salt removal obtained was 35%.

**Claims**

1. A process for preparing an electrode for capacitative deionization of water comprising:

   (i) forming a composition of 60-88% by weight of activated carbon with a particle size range of 75-300 microns, 5-30% by weight of thermoplastic polymeric binder with a particle size range of 20-60 microns and 2-30% by weight of conductive carbon black having a mesopore area greater than 100 $m^2$/g and including a fluid to said mixture wherein amount of said fluid is not more than 4 times the weight of said composition;
   (ii) casting the composition obtained in step (i) in a mould;
   (iii) optionally, compressing said mould;
   (iv) heating said mould to a temperature in the range 150°C to 350°C;
   and
   (v) demoulding the moulded electrode.

2. A process as claimed in claim 1 wherein the fluid is water.

3. A process as claimed in claim 1 or 2 wherein the casting of said composition is done using a mould to form a sheet.

4. A process as claimed in any one of the claims 1 to 3 wherein the casting of the composition is over a current collector in the mould.

5. A process as claimed in claim 4 wherein the current collector is selected from graphite, aluminium or titanium.

6. A process as claimed in any one of the claims 1 to 5 wherein temperature of said mould is from 200°C to 300°C.

7. A process as claimed in any one of the claims 1 to 6 wherein the mould is compressed to a pressure of not more than 30 kg/cm$^2$ before heating said mould.

8. A process as claimed in claim 7 wherein pressure is from 12 to 25 kg/cm$^2$.

9. A process as claimed in any one of the claims 1 to 8 wherein the particle size of the thermoplastic polymeric binder is greater than 40 microns.

10. A process as claimed in any one of claims 1 to 9, wherein the thermoplastic polymeric binder has a Melt Flow Rate less than 5 grams/10 minutes.

11. A process as claimed in any one of claims 1 to 10, wherein the particle size of the activated carbon is 100-250 microns.

12. An electrode for capacitative deionization of water obtainable by the process as claimed in any one of claims 1 to 11.

13. An electrode as claimed in claim 12, substantially free of fibrillated polymer.

14. An electrode as claimed in claim 12 or 13, wherein the conductive carbon black has mesopore area greater than 100-1000 $m^2$/g.

15. An electrode as claimed in any one of claims 12 to 14 in the form of a sheet.

16. An electrode as claimed in claim 15 wherein the sheet thickness in not greater than 3 mm.

17. An electrode as claimed in any one of claims 12 to 16, wherein the polymeric binder is ultra high molecular weight polyethylene of ultra high molecular weight polypropylene or mixture thereof.

18. An electrode as claimed in any one of claims 12 to 17, wherein molecular weight of said polymeric binder is from $10^6$ to $10^9$ 9/mole.

19. A gravity fed purification system comprising an electrode for capacitive deionization of water as claimed in any one of claims 12 to 18.

**Patentansprüche**

1. Verfahren zur Herstellung einer Elektrode zur kapazitiven Deionisierung von Wasser, das Folgendes umfasst:

   (i) Bilden einer Zusammensetzung von 60-88 Gew.-% aktiviertem Kohlenstoff mit einem Partikelgrößenbereich von 75-300 Mikrometer, 5-30 Gew.-% von einem thermoplastischen polymeren Bindemittel mit einem Partikelgrößenbereich von 20-60 Mikrometer und 2-30 Gew.-% leitfähigem Ruß, der eine Mesoporenfläche aufweist, die größer als 100 $m^2$/g ist, und Aufnehmen einer Flüssigkeit in die Mischung, wobei die Menge der Flüssigkeit nicht mehr als das Vierfache des Gewichts der Zusammensetzung beträgt;
   (ii) Gießen der in Schritt (i) erhaltenen Zusammensetzung in eine Form;
   (iii) optional Komprimieren der Form;
   (iv) Heizen der Form auf eine Temperatur in dem Bereich von 150 °C bis 350 °C; und
   (v) Entnehmen der geformten Elektrode aus der Form.

2. Verfahren nach Anspruch 1, wobei die Flüssigkeit Wasser ist.

3. Verfahren nach Anspruch 1 oder 2, wobei das Gießen der Zusammensetzung unter Verwendung einer Form durchgeführt wird, um eine Platte zu bilden.

4. Verfahren nach einem der Ansprüche 1 bis 3, wobei das Gießen der Zusammensetzung über einen Stromabnehmer in der Form erfolgt.

5. Verfahren nach Anspruch 4, wobei der Stromabnehmer aus Graphit, Aluminium oder Titan ausgewählt ist.

6. Verfahren nach einem der Ansprüche 1 bis 5, wobei die Temperatur der Form im Bereich von 200 °C bis 300 °C liegt.

7. Verfahren nach einem der Ansprüche 1 bis 6, wobei die Form vor dem Heizen der Gießform auf einen Druck von nicht mehr als 30 kg/cm$^2$ komprimiert wird.

**8.** Verfahren nach Anspruch 7, wobei der Druck im Bereich von 12 bis 25 kg/cm$^2$ liegt.

**9.** Verfahren nach einem der Ansprüche 1 bis 8, wobei die Partikelgröße des thermoplastischen polymeren Bindemittels größer als 40 Mikrometer ist.

**10.** Verfahren nach einem der Ansprüche 1 bis 9, wobei das thermoplastische polymere Bindemittel eine Schmelzflussrate von weniger als 5 Gramm/10 Minuten aufweist.

**11.** Verfahren nach einem der Ansprüche 1 bis 10, wobei die Partikelgröße des aktivierten Kohlenstoffs 100-250 Mikrometer beträgt.

**12.** Elektrode zur kapazitiven Deionisierung von Wasser, erhältlich durch das Verfahren nach einem der Ansprüche 1 bis 11.

**13.** Elektrode nach Anspruch 12, die im Wesentlichen frei von fibrilliertem Polymer ist.

**14.** Elektrode nach Anspruch 12 oder 13, wobei der leitfähige Ruß eine Mesoporenfläche aufweist, die größer als 100-1000 m$^2$/g ist.

**15.** Elektrode nach einem der Ansprüche 12 bis 14 in Form einer Platte.

**16.** Elektrode nach Anspruch 15, wobei die Plattendicke nicht größer als 3 mm ist.

**17.** Elektrode nach einem der Ansprüche 12 bis 16, wobei das polymere Bindemittel ein Polyethylen mit einem ultrahohen Molekulargewicht, ein Polypropylen mit einem ultrahohen Molekulargewicht oder eine Mischung davon ist.

**18.** Elektrode nach einem der Ansprüche 12 bis 17, wobei das Molekulargewicht des polymeren Bindemittels von 10$^6$ bis 10$^9$ g/Mol beträgt.

**19.** Schwerkraftreinigungssystem, das eine Elektrode zur kapazitiven Deionisierung von Wasser nach einem der Ansprüche 12 bis 18 umfasst.

**Revendications**

**1.** Procédé de préparation d'une électrode pour la désionisation capacitive d'eau comprenant :

(i) la formation d'une composition de 60 à 88 % en poids de charbon actif ayant une plage de taille de particule de 75 à 300 microns, 5 à 30 % en poids de liant polymère thermoplastique ayant une plage de taille de particule de 20 à 60 microns et 2 à 30 % en poids de noir de carbone conducteur ayant une surface de mésopores supérieure à 100 m$^2$/g et comprenant un fluide audit mélange où la quantité dudit fluide n'est pas supérieure à 4 fois le poids de ladite composition ;
(ii) la coulée de la composition obtenue dans l'étape (i) dans un moule ;
(iii) facultativement, la compression dudit moule ;
(iv) le chauffage dudit moule à une température dans la plage de 150 °C à 350 °C ; et
(v) le démoulage de l'électrode moulée.

**2.** Procédé selon la revendication 1 dans lequel le fluide est l'eau.

**3.** Procédé selon la revendication 1 ou 2 dans lequel la coulée de ladite composition est effectuée au moyen d'un moule pour former une feuille.

**4.** Procédé selon l'une quelconque des revendications 1 à 3 dans lequel la coulée de la composition est effectuée sur un collecteur de courant dans le moule.

**5.** Procédé selon la revendication 4 dans lequel le collecteur de courant est choisi parmi le graphite, l'aluminium ou le titane.

**6.** Procédé selon l'une quelconque des revendications 1 à 5 dans lequel la température dudit moule est de 200 °C à 300 °C.

**7.** Procédé selon l'une quelconque des revendications 1 à 6 dans lequel le moule est comprimé à une pression de pas plus de 30 kg/cm$^2$ avant chauffage dudit moule.

**8.** Procédé selon la revendication 7 dans lequel la pression est de 12 à 25 kg/cm$^2$.

**9.** Procédé selon l'une quelconque des revendications 1 à 8 dans lequel la taille de particule du liant polymère thermoplastique est supérieure à 40 microns.

**10.** Procédé selon l'une quelconque des revendications 1 à 9, dans lequel le liant polymère thermoplastique a un indice de fluage inférieur à 5 grammes/10 minutes.

**11.** Procédé selon l'une quelconque des revendications 1 à 10, dans lequel la taille de particule du charbon actif est de 100 à 250 microns.

**12.** Électrode de désionisation capacitive d'eau pouvant être obtenue par le procédé selon l'une quelconque des revendications 1 à 11.

**13.** Électrode selon la revendication 12, sensiblement exempte de polymère fibrillé.

**14.** Électrode selon la revendication 12 ou 13, dans laquelle le noir de carbone conducteur a une surface de mésopores supérieure à 100 à 1000 m$^2$/g.

**15.** Électrode selon l'une quelconque des revendications 12 à 14 sous la forme d'une feuille.

**16.** Électrode selon la revendication 15 dans laquelle l'épaisseur de feuille n'est pas supérieure à 3 mm.

**17.** Électrode selon l'une quelconque des revendications 12 à 16, dans laquelle le liant polymère est un polyéthylène à poids moléculaire très élevé ou un polypropylène à poids moléculaire très élevé ou un mélange de ceux-ci.

**18.** Électrode selon l'une quelconque des revendications 12 à 17, dans laquelle le poids moléculaire dudit liant polymère est de 10$^6$ à 10$^9$ g/mole.

**19.** Système de purification alimenté par gravité comprenant une électrode pour la désionisation capacitive d'eau selon l'une quelconque des revendications 12 à 18.

Figure 1

Figure 2

Figure 3

Figure 4

Figure 5

Figure 6

OUT

## REFERENCES CITED IN THE DESCRIPTION

### Patent documents cited in the description

- EP 1555244 A
- US 6127474 A
- US 7110242 B
- US 6022436 A
- US 20050042513 A, Curran
- US 20060114643 A